(19) Europäisches Patentamt
European Patent Office
Office européen des brevets

(11) **EP 2 009 780 A1**

(12) **EUROPEAN PATENT APPLICATION**
published in accordance with Art. 153(4) EPC

(43) Date of publication:
**31.12.2008 Bulletin 2009/01**

(21) Application number: **06732135.6**

(22) Date of filing: **20.04.2006**

(51) Int Cl.:
***H02N 11/00*** (2006.01)

(86) International application number:
**PCT/JP2006/308277**

(87) International publication number:
**WO 2007/122709 (01.11.2007 Gazette 2007/44)**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Akamatsu, Norio**
**Tokushima-shi**
**Tokushima 770-0813 (JP)**

(72) Inventor: **Akamatsu, Norio**
**Tokushima-shi**
**Tokushima 770-0813 (JP)**

(74) Representative: **Skuhra, Udo**
**Reinhard, Skuhra, Weise & Partner GbR**
**Patent- und Rechtsanwälte**
**Friedrichstraße 31**
**80801 München (DE)**

(54) **LINEAR ACCELERATION GENERATOR**

(57) A linear acceleration electricity generating apparatus, based on a new concept entirely different from the conventional electricity generating methods, can generate electricity with high efficiency, with a small external energy input, and further can achieve a stable supply of electricity without apprehension of exhaustion, while paying due consideration to the environment.

The linear acceleration electricity generating apparatus comprises an electron supplier 20 possessing free electrons, an electron emitter 30 provided on the electron supplier 20 in an electrically conductive state, one or a plurality of electron accelerating electrodes 40 for linearly accelerating electrons e within the electron emitter 30 in the direction of electron emission provided electrically insulated from the electron emitter 30, and an electron collector 50 for collecting the electrons e emitted from the electron emitter 30 provided opposite to the electron emitter 30 through an electrical insulation space F, wherein the electrons within the electron emitter 30 are linearly accelerated by applying a positive voltage to the electron accelerating electrode 40, emitted as ballistic electrons into the electrical insulation space F from the electron emitter 30, and received and collected by the electron collector 50.

## Description

## Technical Field

The present invention relates to a linear acceleration electricity generating apparatus, and in particular to an electricity generating apparatus which generates electricity by emitting linearly accelerated electrons into space from a material.

## Background Art

In electricity generation, as a method of attaining electrical energy, hydroelectricity and wind-powered generation have been known since a long time ago, and solar-powered and tidal-powered generations using natural energy are known as well. Further, thermal electricity generation using fossil fuels and nuclear electricity generation using nuclear energy are also known.

In the case of electricity generation using fossil fuels, there exists an imminent problem that fossil fuels of raw materials are a limited natural resource, so that they are going to be exhausted before long. Thus, it is impossible to meet the needs of the world over the long term.

Further, in the case of electricity generation using natural energy such as sunlight, wind power and the like, there is a drawback that it is not guaranteed that electricity can be surely supplied whenever we need, because natural energy such as sunlight and wind power is varied depending on the natural conditions.

Still further, in the case of nuclear electricity generation using nuclear energy, there is a big problem regarding safety and facilities.

On the other hand, the present inventor has provided a method of generating electricity by converting thermal energy into electrical energy, which is described in the following Patent Documents 1 through 4. In the method of generating electricity, sunlight is applied to a material and converted into thermal energy, thermal electrons are emitted from within the heated material, and thermal energy is converted into electrical energy by thermal electron emission.

Further, the following Patent Document 5 discloses an electricity generating apparatus for converting thermal energy into electrical energy.

Still further, the following Patent Document 6 discloses an apparatus which adopts a method of emitting electrons by field effect.

Patent Document 1: Japanese Patent No.3449623
Patent Document 2: Japanese Patent Laid-Open No. 2003-189646
Patent Document 3: Japanese Patent Laid-Open No. 2003-250285
Patent Document 4: Japanese Patent Laid-Open No. 2004-140288
Patent Document 5: Japanese Patent Laid-Open No. 2003-258326

Patent Document 6: Japanese Patent National Publication No. 11-510307

## Disclosure of the Invention

## Problems to be Solved by the Invention

The inventions disclosed in Patent Documents 1 through 4, however, all adopt a method of generating electricity by supplying thermal energy to a material, emitting thermal electrons from within the heated material, and collecting emitted electrons. Specifically, these are electricity generating apparatuses of the type that convert externally provided thermal energy to electrical energy. To attain large electrical energy, correspondingly large thermal energy input is required.

Patent Document 5 discloses a device and an apparatus which employ a method of emitting electrons. However, the device and apparatus are nothing but a converter for converting thermal energy into electrical energy. In respect of generating electricity, they are limited to an electricity generator that adopts thermal electron emission by heating.

Patent Document 6 discloses a material and an apparatus for emitting electrons by field effect. However, disclosed therein are a discharging apparatus, an electron gun and a display using emitted electrons themselves, which completely lack the technical idea of utilizing the field emission of electrons for generating electricity.

In view of the forgoing, an object of the present invention is to provide a novel electricity generating apparatus, based on a new concept entirely different from the concepts of conventional electricity generating methods, which is capable of stably generating electricity with high efficiency, with a small external energy input, and without apprehension of exhaustion, while paying due consideration to the environment. Means for Solving the Problems

To achieve the above-mentioned objective, the present inventor has diligently carried out various kinds of experiments and examinations. As a result, he has acquired that a highly efficient electricity generation can be obtained by using ballistic electron emission in which electrons in a material are linearly accelerated by field effect and the linearly accelerated ballistic electrons are emitted into space from within the material body. And finally, he has achieved the present invention by establishing a new method of generating electricity by using the ballistic electron emission, which is entirely different from the conventional methods accompanying with energy conversion such as thermal electron emission.

If there exist electrons within an electrical field, they are accelerated. An accelerator for accelerating the electrons in the one-dimensional direction is defined as a linear accelerator.

A carbon nanotube is given as an example of a material having a quasi-one-dimensional shape. One of the characteristics of a carbon nanotube is aspect ratio. In other words, the length of a carbon nanotube is extremely long with respect to the diameter of that. For instance, the diameter of single wall carbon nanotube is in the vicinity of 1 nm, approaching the order of Fermi wavelength. Because of this, a carbon nanotube can function as a material having a quasi-one-dimensional shape capable of substantially moving electrons in the one-dimensional direction. If electrons in a quasi-one-dimensional material are accelerated in the one-dimensional direction, they become ballistic electrons.

In particular, when electrons within a single wall carbon nanotube are accelerated by field effect, they move ballistically without any dispersion. Namely, by using a quasi-one-dimensional electrical conductor such as a carbon nanotube, it is made possible to linearly accelerate electrons as ballistic electrons, and emit them into space from the tip of the quasi-one-dimensional electrical conductor. There are two types in a carbon nanotube, one is metallic and the other is semi-conductive. A metallic carbon nanotube can linearly accelerate electrons more efficiently than a semi-conductive one.

Electrons, emitted into space from the tip of a carbon nanotube used as a quasi-one-dimensional electrical conductor, continuously fly in the space unless obstacles prevent them from flying. If an electrically conductive material is located on the orbits of the emitted ballistic electrons, the electrons collide with the electrically conductive material, and are absorbed thereinto. An electrically conductive material for receiving and absorbing flying ballistic electrons is defined as an electron collector.

An electron collector is charged negatively by absorbing electrons. In other words, the electron collector which electrons repeatedly collide with has a negative potential. Hence, in the case that the electron collector is kept electrically insulated from others, the negative potential is to be gradually increased.

The more the electron collector absorbs electrons, the more the negative potential increases. Ultimately, electrons approaching the electron collector are affected by the action of a large electrical field in the opposite direction, and fail to reach the electron collector. The critical potential at this time becomes an electromotive force of a linear acceleration electricity generating apparatus.

When electrons are sufficiently linearly accelerated and emitted into space, the above-mentioned electromotive force can easily attain several tens through several hundreds of volts.

By transmitting (transmitting electricity) electrons absorbed into the electron collector to the outside, electricity can be used.

In a linear acceleration electricity generating apparatus, an electrical field for linearly accelerating electrons in a quasi-one-dimensional electrical conductor is applied by an electron accelerating electrode. If the electron accelerating electrode is provided electrically insulated from the quasi-one-dimensional electrical conductor, electrons within the quasi-one-dimensional electrical conductor are linearly accelerated therein, and emitted into an electrical insulation space from the tip thereof without reaching the electron accelerating electrode. Namely, the emitted electrons are not absorbed by positive charges of the electron accelerating electrode, and thus, the amount of consumed electrical charges (the energy loss) is negligible in theory.

As can be seen above, the present invention has achieved a practicable electricity generating apparatus by linearly accelerating free electrons in a quasi-one-dimensional electrical conductor, emitting the electrons as ballistic electrons from the tip of quasi-one-dimensional electrical conductor, and collecting and storing the emitted electrons in the electron collector, not in the electron accelerating electrode. At this time, the amount of consumed positive charges applied to the electron accelerating electrode, that is, the amount of consumed energy can be reduced to the minimum.

A linear acceleration electricity generating apparatus of the present invention comprises:

an electron supplier made of a material possessing free electrons,
an electron emitter provided on the electron supplier in an electrically conductive state,
one or a plurality of electron accelerating electrodes for linearly accelerating electrons within the electron emitter in the direction of electron emission provided electrically insulated from the electron emitter, and
an electron collector for collecting electrons emitted from the electron emitter provided opposite to the electron emitter through an electrical insulation space,

A linear acceleration electricity generating apparatus according to the present invention has a first feature that electrons within the electron emitter are linearly accelerated by applying a positive voltage to the electron accelerating electrode, emitted as ballistic electrons into the electrical insulation space from the electron emitter, and received and collected by the electron collector.

In addition to the first feature mentioned above, a linear acceleration electricity generating apparatus according to the present invention has a second feature that the electron emitter is formed by vertically planting one or a plurality of quasi-one-dimensional electrical conductors on the surface of the electron supplier.

In addition to the second feature mentioned above, a linear acceleration electricity generating apparatus according to the present invention has a third feature that the quasi-one dimensional electrical conductor is a carbon nanotube.

In addition to the second or the third feature mentioned above, a linear acceleration electricity generating apparatus according to the present invention has a fourth feature that the electron accelerating electrode is made of a quasi-two-dimensional electrical conductor, and provided on the side periphery of the electron emitter, while being electrically insulated from the electron emitter formed by vertically planting quasi-one-dimensional electrical conductors.

In addition to the first feature mentioned above, a linear acceleration electricity generating apparatus according to the present invention has a fifth feature that an electron reaching position dispersion means is provided so as to prevent electrons flying toward the electron collector from concentratedly reaching one part of the electron collector by dispersing the orbits of the electrons.

In addition to the first feature mentioned above, a linear acceleration electricity generating apparatus according to the present invention has a sixth feature that a plurality of electron collectors are provided electrically insulated from each other, and an electron distribution means is provided so as to distribute electrons emitted from the electron emitter to the plurality of electron collectors.

In addition to the first feature mentioned above, a linear acceleration electricity generating apparatus according to the present invention has a seventh feature that a secondary emission preventing means is provided so as to prevent electrons having reached the electron collector from being emitted secondarily.

In addition to the first feature mentioned above, a linear acceleration electricity generating apparatus according to the present invention has a eighth feature that the electron collector is electrically connected to the electron supplier, and an electrical load is provided between the electron collector and the electron supplier.

**Effect of the Invention**

According to a linear acceleration electricity generating apparatus recited in claim 1, if a positive voltage is applied to the electron accelerating electrode, electrons within the electron emitter are linearly accelerated in the direction of electron emission by Coulomb force of the electron accelerating electrode, become ballistic electrons, and whereby the kinetic energy of the electrons is increased. When the electron energy surmounts a potential barrier on the surface of the electron emitter, electrons are emitted into the electrical insulation space from the electron emitter. As a condition for causing the electrons to easily surmount the potential barrier, it is important to pay due consideration to the material and shape of the electron emitter having a very low potential barrier. Further, to increase the speed of accelerating electrons of the electron accelerating electrode up to the speed necessary for emitting electrons, and to reduce a positive voltage applied to the electron accelerating electrode, it is important for the electron accelerating electrode to be provided as close as possible to the periphery of the electron emitter.

Electrons emitted from the electron emitter fly toward the electron collector through the electrical insulation space, collide with the electron collector, and thereby being received. By this, the emitted electrons are collected by the electron collector and the amount of electrons in the electron collector is increased, which is in a state of electricity generation.

In view of efficient electricity generation, it is desirable to keep the electron collector in an electrically neutral state or in a negative state. This is because the state can prevent electrons from connecting with an atomic nucleus. On the other hand, a repulsion force increases as negative charges of the electron collector increase, causing the electron collector to have great difficulty in receiving electrons. To solve this problem, it is important to increase the electron kinetic energy by enhancing the degree of linear acceleration, or to keep the amount of negative charges on the surface of the electron collector small by transferring the negative charges from the surface thereof to other positions.

As long as the electron accelerating electrode is kept electrically insulated from the electron emitter, and the emitted electrons don't reach the electron accelerating electrode, the amount of consumed positive charges applied to the electron accelerating electrode is negligible in theory. Therefore, it is possible to drastically reduce the energy consumption (the amount of external energy input).

As can be appreciated from the foregoing description, according to the linear acceleration electricity generating apparatus recited in claim 1 of the present invention, the electrons emitted into the electrical insulation space are collected by the electron collector, while the consumed energy for linearly accelerating electrons is controlled to be low by utilizing an electron emission phenomenon due to linear acceleration, and whereby the linear acceleration electricity generating apparatus can generate electricity efficiently.

Further, according to the linear acceleration electricity generating apparatus recited in claim 1 of the present invention, the energy efficiency in generating electricity is preferable, in comparison with the conventional electricity generating apparatuses that adopt a method of generating electricity by supplying thermal energy to a material, and emitting thermal electrons from within the heated material, that is, by converting thermal energy to electrical energy.

Still further, according to the linear acceleration electricity generating apparatus recited in claim 1 of the present invention, a stable energy supply can be achieved with easy operational control, unlike an electricity generating apparatus using unstable natural resources such as sunlight and the like being varied depending on the natural conditions.

According to the linear acceleration electricity generating apparatus recited in claim 2, in addition to the effect due to the structure described in the claim 1, the electron emitter is formed by vertically planting one or a plurality of quasi-one-dimensional electrical conductors on the surface of the electron supplier.

The quasi-one-dimensional electrical conductor means an electrical conductor which has the same action as a one-dimensional electrical conductor in respect of electron emission, that is, has an extremely narrow shape capable of substantially moving (accelerating) electrons in the one-dimensional direction.

In the case that a quasi-one-dimensional electrical conductor is used as the electron emitter, electrons are substantially moved and accelerated only in the one-dimensional direction by the action of the electron accelerating electrode, and emitted from the tip thereof. By making the longitudinal direction of the quasi-one-dimensional electrical conductor correspond with the direction of electron emission, the electrons can be emitted easily from the quasi-one-dimensional electrical conductor. Further, in this case, it is thought that a potential barrier with respect to the electrons emitted from the tip thereof becomes low.

The electron emitter can be formed by vertically planting a multiplicity of quasi-one-dimensional electrical conductors on the surface of the electron supplier. In the electron emitter with this structure, free electrons in the electron supplier are to pass through the multiplicity of quasi-one-dimensional electrical conductors, and emitted from each tip thereof. Thus, on the whole, a large amount of free electrons can be efficiently linearly accelerated and emitted from the tips thereof.

According to the linear acceleration electricity generating apparatus recited in claim 3, in addition to the effect due to the structure described in the claim 2, a carbon nanotube is used as a quasi-one-dimensional electrical conductor. In this case, electrons can migrate sufficiently freely. Further, highly efficient electron emission can be achieved by vertically planting a carbon nanotube on the surface of the electron supplier in such a manner that the longitudinal direction of the carbon nanotube corresponds with the direction of electron emission. Needless to say, it is a metallic carbon nanotube that is used as a quasi-one-dimensional electrical conductor. Still further, by using an open carbon nanotube, electrons can be emitted more efficiently from the tip thereof.

According to the linear acceleration electricity generating apparatus recited in claim 4, in addition to the effect due to the structure described in the claim 2 or 3, the electron accelerating electrode is made of a quasi-two-dimensional electrical conductor, and provided on the side periphery of the electron emitter, while being electrically insulated from the electron emitter formed by vertically planting a quasi-one-dimensional electrical conductor on the surface of the electron supplier. Since the electron accelerating electrode is provided so as to be insulated from the electron emitter, positive charges applied to the electron accelerating electrode are not consumed in theory.

Further, by using a quasi-two-dimensional electrical conductor as an electron accelerating electrode, the electron accelerating electrode can be made very thin. Hence, one or a plurality of quasi-two-dimensional electrical conductors having a very thin thickness can be provided on the side periphery of the electron emitter, even if the protruding length of the electron emitter, which is formed by vertically planting a quasi-one-dimensional electrical conductor on the surface of the electron supplier, from the surface of the electron supplier is short. Additionally, the tip of the electron emitter made of a quasi-one-dimensional electrical conductor can be sufficiently protruded forwardly from the level of the electron accelerating electrode. Consequently, the electron accelerating electrode does not obstruct electron emission from the tip of the electron emitter. In other words, the electrons emitted from the tip of the electron emitter can fly toward and reach the electron collector without any obstructions.

According to the linear acceleration electricity generating apparatus recited in claim 5, in addition to the effect due to the structure described in the claim 1, an electron reaching position dispersion means is provided so as to prevent electrons flying toward the electron collector from concentratedly reaching one part of the electron collector by dispersing the orbits of the electrons. By using the electron reaching position dispersion means, an inconvenience such that electrons damage the electron collector by concentratedly colliding with one part of the electron collector can be prevented, and whereby the durability of the linear acceleration electricity generating apparatus can be enhanced.

According to the linear acceleration electricity generating apparatus recited in claim 6, in addition to the effect due to the structure described in the claim 1, a plurality of electron collectors are provided electrically insulated from each other, and an electron distribution means is provided so as to distribute electrons emitted from the electron emitter to the plurality of electron collectors. The electrons emitted from the electron emitter are distributed to the plurality of electron collectors by the electron distribution means, and received by each of the electron collectors. For this, each of the electron collectors can receive and collect the electrons readily and efficiently.

In the case that only one electron collector receives all of the emitted electrons, the amount of negative charges of the electron collector sharply increases because of receiving a multiplicity of electrons at a time, so that the coming electrons are repulsed and the rate of receiving electrons can be drastically decreased. On the other hand, in the case that electrons are distributed by the electron distribution means and collected by a plurality of electron collectors, the amount of electrons in each electron collector is not suddenly increased, and thus, the increase of negative charges in the electron collector can be properly controlled by transferring the electrons having reached the electron collector to other positions, or by using them for electricity. Consequently, the coming electrons can be efficiently received by the electron collector without being repulsed by negative charges.

According to the linear acceleration electricity generating apparatus recited in claim 7, in addition to the effect due to the structure described in the claim 1, a secondary emission preventing means is provided so as to prevent electrons having reached an electron collector from being emitted secondarily. By the secondary emission preventing means, secondary electron emission from the electron collector can be certainly prevented, so that highly efficient electricity generation can be achieved.

According to the linear acceleration electricity generating apparatus recited in claim 8, in addition to the effect due to the structure described in the claim 1, the electron collector is electrically connected to the electron supplier, and an electrical load is provided between the electron collector and the electron supplier. Due to this configuration, the electrons received by the electron collector are supplied to the electrical load and the generated electricity is consumed therein. The electrons having passed through the electrical load return to the electron supplier. Namely, the circulation of electrons can be achieved.

**Brief Description of the Drawings**

Fig.1 is an abbreviated cross-sectional view of the linear acceleration electricity generating apparatus according to an embodiment of the present invention.

Fig.2 is a cross-sectional view showing the details of the primary part of the linear acceleration electricity generating apparatus according to an embodiment of the present invention.

Fig. 3 is an illustration showing an example of an electron accelerating electrode, made of a quasi-two-dimensional electrical conductor that is formed by connecting quasi-one dimensional electrical conductors in a mesh-shape, in the linear acceleration electricity generating apparatus according to an embodiment of the present invention.

Fig.4 is an illustration showing an example of an electron accelerating electrode, made of a quasi-two dimensional electrical conductor that is formed by providing quasi-one dimensional electrical conductors in parallel, in the linear acceleration electricity generating apparatus according to an embodiment of the present invention.

Fig.5 is an illustration showing an example of an electron emitter formed by vertically planting a plurality of quasi-two dimensional electrical conductors on the surface of an electron supplier in the linear acceleration electricity generating apparatus according to an embodiment of the present invention.

Fig.6 is an illustration describing an electromotive force in a linear acceleration electricity generating apparatus.

Fig.7 is an illustration describing an example of an electron reaching position dispersion means added to the linear acceleration electricity generating apparatus according to an embodiment of the present invention.

Fig.8 is an illustration describing an example of an electron distribution means added to the linear acceleration electricity generating apparatus according to an embodiment of the present invention.

Fig.9 is an illustration describing a concrete example of an electricity extracting circuit configured for the case in which an electron distribution means is added to the linear acceleration electricity generating apparatus according to an embodiment of the present invention.

Fig.10 is an illustration describing an example of a secondary emission preventing means added to the linear acceleration electricity generating apparatus according to an embodiment of the present invention.

Fig.11 is an illustration describing another example of a secondary emission preventing means added to the linear acceleration electricity generating apparatus according to an embodiment of the present invention.

**Description of the Reference Characters**

| | |
|---|---|
| 10 | vacuum vessel |
| 20 | electron supplier |
| 30 | electron emitter |
| 30a | quasi-one-dimensional electrical conductor |
| 40 | electron accelerating electrode |
| 40a | quasi-one-dimensional electrical conductor |
| 41 | electron accelerating power supply |
| 50 | electron collector |
| 60 | electricity extracting circuit |
| 61 | electrical load |
| 70 | electrical insulator |
| 90 | electron reaching position dispersion means |
| 100 | electron distribution means |
| 110 | secondary emission preventing means |
| F | electrical insulation space |
| e | electron |

**Best Mode for Carrying Out the Invention**

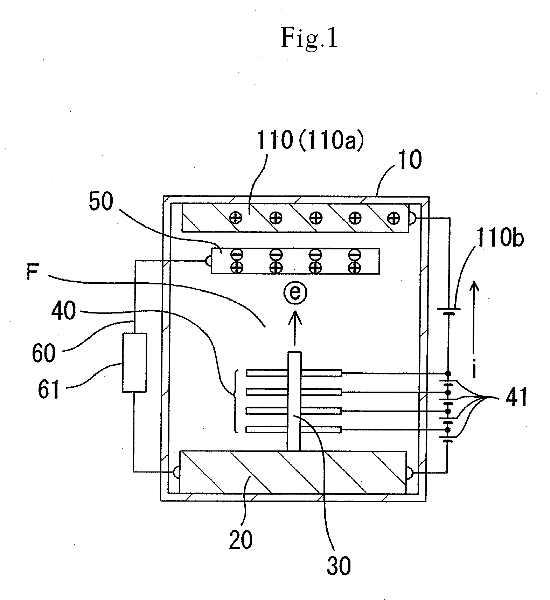

A linear acceleration electricity generating apparatus according to an embodiment of the present invention will be described in greater details below with reference to Fig. 1.

In the linear acceleration electricity generating apparatus, there are provided an electron supplier 20, an electron emitter 30, an electron accelerating electrode 40, an electron collector 50, and a secondary emission preventing means 110 within an electrical insulation space F of a vacuum vessel 10, and further an electron accelerating power supply 41 and an electricity extracting circuit 60 outside of the vacuum vessel 10.

The vacuum vessel 10 is a vessel which is evacuated or of which pressure is sufficiently reduced, and the kind of material for the vacuum vessel 10 is not restrictive. The electrical insulation space F, the interior of the vacuum vessel 10, is maintained in a vacuum or at a reduced pressure.

The electron supplier 20 is a source of supplying electrons, and made of metallic or other materials possessing a large amount of free electrons.

The electron emitter 30 for emitting electrons into the electrical insulation space F is provided so as to be electrically conductive to the electron supplier 20.

The electron emitter 30 is preferably made of materials having a low potential barrier with respect to electrons emitted from the tip thereof, that is, having a small work function E, the minimum energy necessary for emitting electrons into the electrical insulation space F from the electron emitter 30.

The electron accelerating electrode 40 is an electrode for linearly accelerating electrons within the electron emitter 30 in the direction of electron emission, and made of one or a plurality of electrodes. The electron accelerating electrode 40 is provided in electrically insulated relation with respect to the electron emitter 30.

The electron collector 50 is provided opposite to the electron emitter 30 through the electrical insulation space F so as to collect electrons emitted from the electron emitter 30 into the electrical insulation space F. The electron collector 50 can be made of such materials having a high ability to hold free electrons as metallic materials and the like.

The electron accelerating power source 41 functions as a power supply for applying a positive voltage to the electron accelerating electrode 40. In an embodiment according to the present invention, the negative electrode is connected with the electron supplier 20, and the positive electrode is connected with the electron accelerating electrode 40.

The electricity extracting circuit 60 is a circuit for extracting electrons e collected by the electron collector 50. The electricity extracting circuit 60 is electrically connected between the electron collector 50 and the electron supplier 20, and an electrical load 61 is provided therebetween.

In the linear acceleration electricity generating apparatus according to the above mentioned embodiment, electrons e migrating from the electron supplier 20 to the electron emitter 30 are linearly accelerated within the electron emitter 30 in the direction of electron emission due to a positive voltage applied by the electron accelerating electrode 40, become ballistic electrons, and are emitted into the electrical insulation space F from the tip of the electron emitter 30.

The electrons e emitted into the electrical insulation space F fly in a ballistic orbit and collide with the electron collector 50 disposed opposite to the electron emitter 30, and eventually they are absorbed into the electron collector 50.

The electricity extracting circuit 60 is connected between the electron collector 50 and the electron supplier 20, and electrons e absorbed into the electron collector 50 return to the electron supplier 20. When the electrons e pass through the electrical load 61, current i flows. Namely, the generated electricity is consumed in the electrical load 61.

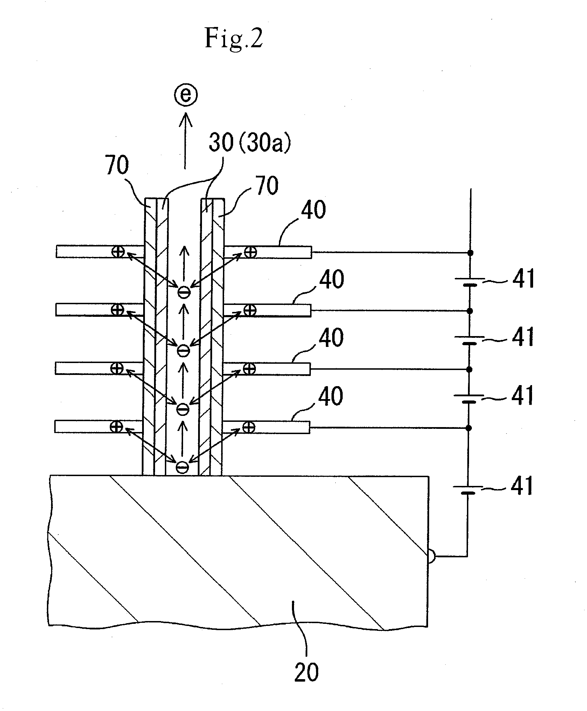

Turning to Figs. 2, there is shown the details of the electron emitter 30 and the electron accelerating electrode 40 in a linear acceleration electricity generating apparatus.

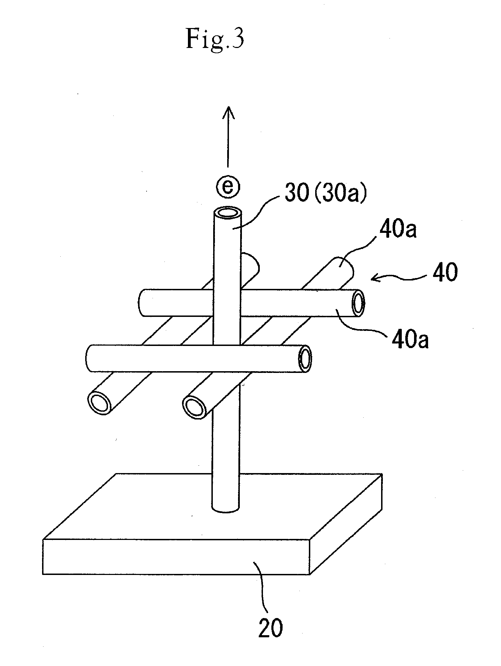

In Figs. 2 and 3, the electron emitter 30 is illustrated by a quasi-one-dimensional electrical conductor 30a, and formed by vertically planting the quasi-one-dimensional electrical conductor 30a in the electron supplier 20. As a practical matter, the quasi-one-dimensional electrical conductor is extremely narrow. However, in these figures, the quasi-one-dimensional electrical conductor 30a is enlarged and conceptually illustrated.

The electron emitter 30 can be formed by bunching a plurality of quasi-one-dimensional electrical conductors 30a.

An electrical insulator 70 is sandwiched between the emitter 30 and the electron accelerating electrode 40 so as to electrically insulate the electron accelerating electrode 40 from the electron emitter 30. This configuration does not allow electrons to migrate from the electron emitter 30 to the electron accelerating electrode 40. Needless to say, the electron accelerating electrode 40 is maintained in electrically insulated relation with respect to the electron supplier 20 through the electric insulation space F. Hence, the electron accelerating electrode 40 is kept electrically insulated from the surroundings, and thus, almost all of the electrical charges supplied from the electron accelerating power supply 41 are not consumed. Namely, the amount of consumed electrical power is negligible in theory, and whereby a highly efficient electricity generating apparatus can be realized.

The electron emitter 30 can be formed by vertically planting a multiplicity of quasi-one-dimensional electrical conductors 30a on the surface of the electron supplier 20. Since the multiplicity of quasi-one-dimensional electrical conductors 30a are vertically planted in the electron supplier 20, a large amount of free electrons within the electron supplier 20 are to pass through the multiplicity of quasi-one-dimensional electrical conductors 30a, and emitted from the tips thereof. Therefore, on the whole, a large amount of free electrons can be emitted efficiently. In this case, the multiplicity of quasi-one-dimensional electrical conductors 30a are kept electrically insulated from the electron accelerating electrode 40.

Still turning to Fig. 2, a tubal electron emitter is illustrated as the electron emitter 30. This intends that the electron emitter 30 can be made of a carbon nanotube, a quasi-one-dimensional electrical conductor.

In the case that the electron emitter 30 is formed by using a carbon nanotube, catalytic materials such as iron, cobalt, nickel and the like are layered on the surface of the electron supplier 20, the temperature in the periphery is set in the vicinity of 650 degrees centigrade, the temperature is properly maintained, and carbonaceous gas such as methane, acetylene, and the like are properly provided. By properly maintaining the above conditions, carbon nanotubes or such quasi-one-dimensional materials as carbon nanotubes can be grown on the electron supplier 20.

As shown in Fig. 2, the electron accelerating electrode 40 is made of a quasi-two-dimensional electrical conductor, corresponding to the electron emitter 30 consisting of one or a plurality of quasi-one-dimensional electrical conductors. By using a quasi-two-dimensional electrical conductor as the electron accelerating electrode 40, the electron accelerating electrode 40 can be made very thin. Hence, even if the emitter 30 shortly protrudes (the protruding length is small) from the level of the electron supplier 20, the electron accelerating electrode 40 can be provided on the side periphery of the electron emitter 30, and further the tip of the electron emitter 30 can sufficiently protrude forwardly from the level of the electron accelerating electrode 40. Due to this configuration, the electrons e within the electron emitter 30 can be sufficiently linearly accelerated by the one or the plurality of electron accelerating electrodes 40, and can be emitted from the tip of the electron emitter 30 protruded beyond the electron accelerating electrodes 40 without any obstructions.

Turning to Fig. 3, there is shown an example of the electron accelerating electrode 40 made of a quasi-two-dimensional electrical conductor which is formed by combining and layering quasi-one-dimensional electrical conductors 40a in a mesh-shape. The electron emitter 30 made of a quasi-one-dimensional electrical conductor 30a is provided penetrating the gap in the quasi-two-dimensional electrical conductor formed in a mesh-shape. Needless to say, the electron emitter 30 is electrically insulated from the electron accelerating electrode 40. In this case, the surface of the quasi-one-dimensional electrical conductor 30a of the electron emitter 30 and the surface of the quasi-one-dimensional electrical conductors 40a of the electron accelerating electrode 40 may be covered with an insulating material. Carbon nanotubes can be used as the quasi-one-dimensional electrical conductor.

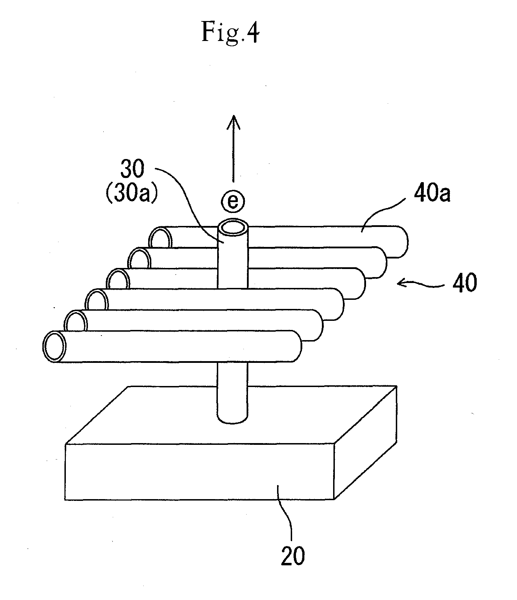

Turning to Fig. 4, there is shown an example of the electron accelerating electrode 40 made of a quasi-two-dimensional electrical conductor that is formed by arranging quasi-one-dimensional electrical conductors 40a in parallel. In the same manner as the example shown in Fig. 3, the electron emitter 30 made of a quasi-one-dimensional electrical conductor 30a is provided penetrating the gap in the quasi-two-dimensional electrical conductor formed by arranging the quasi-one-dimensional electrical conductors 40a in parallel. Needless to say, the electron emitter 30 (30a) is electrically insulated from the electron accelerating electrode 40. In this case, in the same manner as the example shown in Fig. 3, the surface of the quasi-one-dimensional electrical conductor 30a of the electron emitter 30 and the surface of the quasi-one-dimensional electrical conductor 40a of the electron accelerating electrode 40 may be covered with an insulating material, and whereby the electron emitter 30 and the electron accelerating electrode 40 can be certainly electrically insulated from each other. Carbon nanotubes can be used as the quasi-one-dimensional electrical conductor.

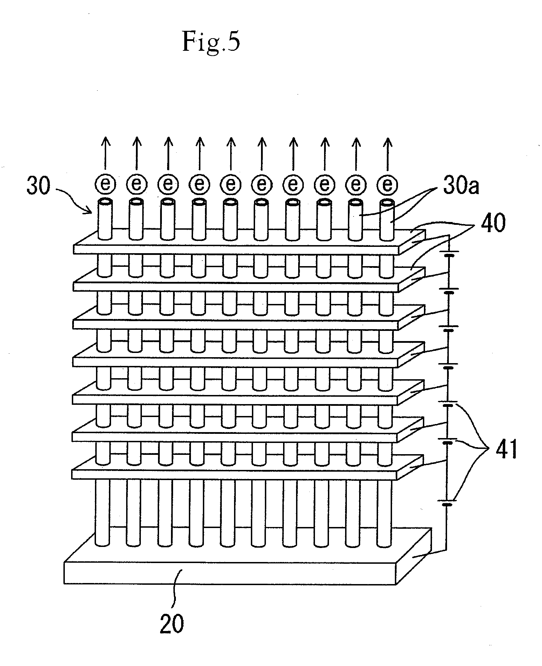

An example of the electron emitter 30 formed by vertically planting a plurality of quasi-one-dimensional electrical conductors 30a will be described in greater details below with reference to Fig. 5.
As shown in the example, the electron emitter 30 is formed by vertically planting a multiplicity of quasi-one-dimensional electrical conductors 30a in a wide region of the surface of the electron supplier 20, a plurality of electron accelerating electrodes 40 are provided in the horizontal direction, and the multiplicity of quasi-one-dimensional electrical conductors 30a are penetrating the plurality of electron accelerating electrodes 40. As for the electron accelerating power supply 41, the negative electrode is connected to the electron supplier 20 and the positive electrode is connected to each of the electron accelerating electrodes 40. The quasi-one-dimensional electrical conductors 30a forming the electron emitter 30 and the electron accelerating electrodes 40 are kept electrically insulated from each other.
The electrons within the electron supplier 20 pass through each of the quasi-one-dimensional electrical conductors 30a of the electron emitter 30 while being linearly accelerated by the plurality of electron accelerating electrodes 40, and they are emitted as ballistic electrons e from each tip of the quasi-one-dimensional electrical conductors 30a protruding beyond the electron accelerating electrodes 40.
The ballistic electrons e collide with the electron collector 50 and thereby being absorbed thereinto.

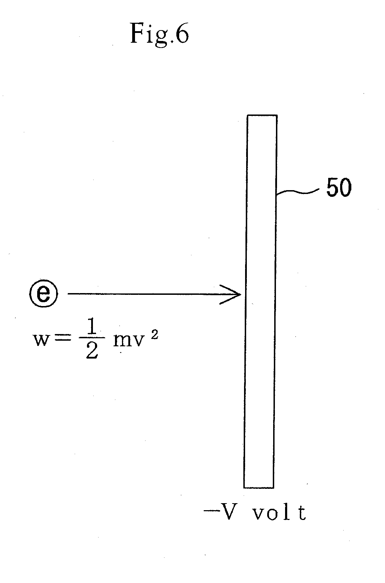

An electromotive force of a linear acceleration electricity generating apparatus according to the present invention is described in greater details herein below with reference to Fig. 6.
Electrons e emitted into the electrical insulation space F from the electron emitter 30 collide with the electron collector 50, and thereby being received and absorbed thereinto. The flying electrons e collide with the electron collector 50 at the velocity of v(m/s). By absorbing the electrons e, the electron collector 50 has an electrical potential of - V (volt). If the electrons e approach the electron collector 50, the velocity of them is decreased. Therefore, if the electrons e fly at the velocity satisfying the following inequality (1), they can reach the electron collector 50.

$$mv^2/2 > qV \qquad (1)$$

In the above-mentioned inequality (1), q (coulomb) is an electrical charge that the electrons possess.

To satisfy the above inequality (1), it is necessary to increase the initial velocity of flying electrons. The initial velocity of the electrons is determined by a voltage applied to the electron accelerating electrodes 40. Accordingly, an electromotive force of the linear acceleration electricity generating apparatus is determined by the voltage applied to the electron accelerating electrodes 40. To attain a large electromotive force, correspondingly a large voltage needs to be applied to the electron accelerating electrodes 40. However, if the voltage applied to the electron accelerating electrodes 40 is increased, a leakage current flowing into an electrical insulator between the electron accelerating electrodes 40 and the negative electrode may be increased. Therefore, it is not preferable to extremely increase the voltage. Consequently, while paying due consideration to the leakage current flowing into the electrical insulator, the generated electromotive force is determined by increasing the accelerating voltage within a small loss.

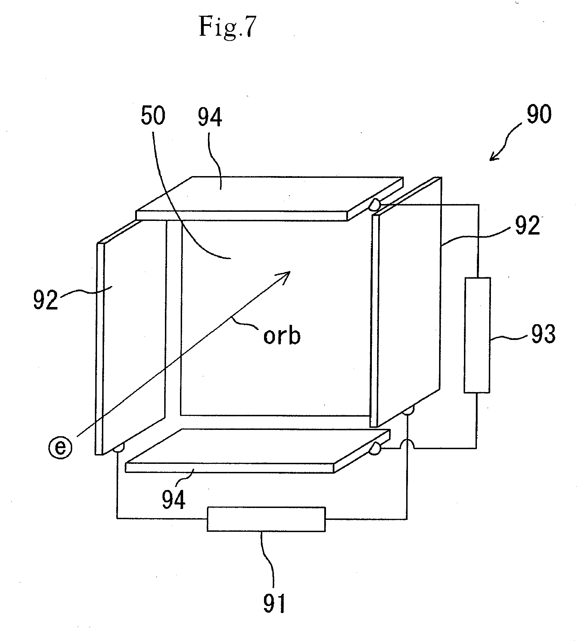

In a linear acceleration electricity generating apparatus according to an embodiment of the present invention shown in Fig. 1, an example of an electron receiving position dispersion means 90 added to the electron collector 50 is described in greater details below with reference to Fig. 7.

The electron reaching position dispersion means 90 prevents electrons e flying towards the electron collector 50 from concentratedly reaching one part of the electron collector 50 by dispersing the orbits of the electrons e.

The electron reaching position dispersion means 90 is provided in front of the electron collector 50 to change the orbits of the electrons e flying towards the electron collector 50 periodically or at random.

Turning to Fig. 7, there is shown the electron collector 50 rotated at 90 degrees from the view of Fig 1. This is because only for sake of easy explanation.

The electron reaching position dispersion means 90 comprises two deflectors 92 provided in the horizontal direction, two deflectors 94 provided in the direction perpendicular to the two horizontal deflectors 92, an electron scanning circuit 91 provided in parallel to the two deflectors 94, and an electron scanning circuit 93 provided in perpendicular to the two deflectors 94, wherein the electron scanning circuit 91 applies electrical signals scanning in the horizontal direction to the two deflectors 92 of the horizontal direction, and the electron scanning circuit 93 applies electrical signals scanning in the perpendicular direction to the two deflectors 94 of the perpendicular direction. The orbits of electrons e are bent to the horizontal direction due to an electrical field change to the horizontal direction caused by the electrical signals scanning in the horizontal direction, and to the perpendicular direction due to an electrical field change to the perpendicular direction caused by the electrical signals scanning in the perpendicular direction. By combining the scanning of the horizontal direction and the perpendicular direction, the orbits of electrons e are changed periodically or at random, as a result, the electrons e are widely dispersed and received by the electron collector 50. Due to this configuration, the electron collector 50 destructions and damages caused by electrons that concentratedly collide with a small part of the electron collector 50 can be prevented, and whereby the durability of the linear acceleration generating apparatus can be enhanced.

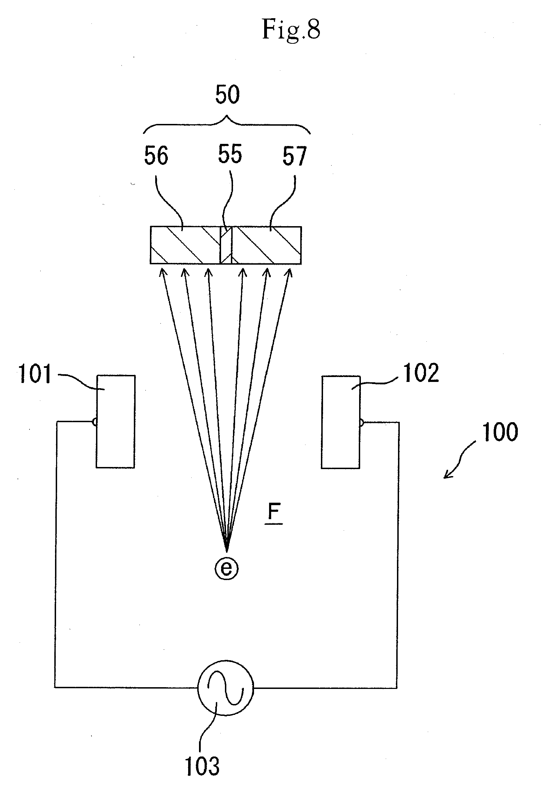

An example of an electron distribution means 100 added to a linear acceleration electricity generating apparatus according to an embodiment of the present invention is described in greater details below with reference to Fig. 8

The case is considered below where electrons e flying in a vacuum have -q (Coulomb) charges and approach the electron collector 50 at the velocity of v. When the charges stored in the electron collector 50 are -Q (Coulomb), Coulomb repulsion acts in proportion to the product (qxQ) of both charges of the electrons e and the electron collector 50. The electrons e can overcome the Coulomb repulsion and collide with the electron collector 50 if the velocity v of the electrons e is large, whereas if the velocity v is small, they can't reach the electron collector 50 due to the action of the Coulomb repulsion. Namely, the amount of negative charges to be stored in the electron collector 50 is limited, and the electrons which cannot collide with the electron collector 50 due to the Coulomb repulsion are absorbed into the positive electrode of the power supply, whereby the efficiency in generating electrical energy is lowered. Hence, it is important to cause the electron collector 50 to absorb all of the electrons e flying in a vacuum.

The electron distribution means 100 is provided in front of the electron collector 50 so as to distribute electrons e to the electron collector 50. Namely, a pair of distribution electrodes 101,102 is provided opposing to each other within the electrical insulation space F between the electron emitter 30 and the electron collector 50 in such a manner that the electrons e can pass through between the electrodes 101,102. The pair of distribution electrodes 101,102 is connected to an alternating current power supply 103 in such a manner that when a positive voltage is applied to one of the distribution electrodes 101(102), a negative voltage is applied to the other 102 (101).

In the case there is provided the electron distribution means 100, the electron collector 50 is made up of a plurality of electron collectors 50 for receiving the distributed electrons. As can be seen in Fig. 8, the electron collector 50 is made up of a first electron collector 56 and a second electron collector 57 which are insulated from each other via an insulating member 55 sandwiched therebetween.

In the configuration mentioned above, if the alternating current power supply 103 is turned ON, a positive potential and a negative potential are applied to the pair of distribution electrodes 101,102 in a fixed period of time.

In the figure, during the period in which a positive potential is applied to the left distribution electrode 101 and a negative potential is applied to the right distribution electrode 102, the orbits of flying electrons e are bent to the direction of the positive potential (the left), so that they collide with the first electron collector 56 on the left, and thereby being eventually absorbed thereinto. On the other hand, during a period in which a positive potential is applied to the right distribution electrode 102 and a negative potential is applied to the left distribution electrode 101, the orbits of flying electrons are bent to the right, so that they collide with the second electron collector 57 on the right, and thereby being absorbed thereinto. In this manner, in a fixed period of time, the electrons e are distributed on the right and left, and collected by the first and the second electron collectors 56, 57.

Since the electrons e are alternately collected by the pair of electron collectors 56, 57, either the first electron collector 56 or the second electron collector 57 can get the electron s e stored therein out for electric power, reducing the amount of electrons therein, during the period of not collecting electrons, and prepare for receiving the coming electrons in the next period.

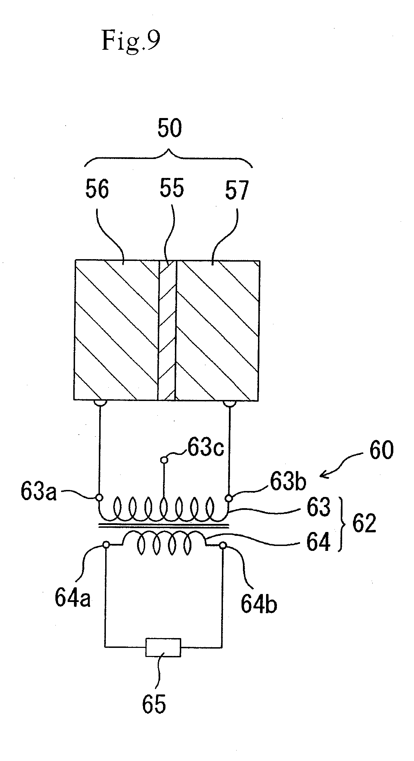

One of the concrete examples of an electricity extracting circuit 60 for extracting electrons e for electric power, distributed by the electron distribution means 100 and stored in the first and second electron collectors 56,57, is described in greater details below with reference to Fig 9.

In the electricity extracting circuit 60, there is provided a transformer 62 in which one end 63a of a primary winding 63 is connected to the first electron collector 56 and the other end 63b is connected to the second electron collector 57, and further an intermediate terminal 63c is provided in the middle of the primary winding 63 while being connected to the electron supplier 20. A voltage is output between both ends 64a, 64b of a secondary winding 64 in the transformer 62. Hence, by connecting an electrical load 65 between the both ends 64a, 64b, the generated electricity is consumed in the electrical load 65.

During the period in which a positive potential is applied to the left distribution electrode 101, electrons are received and stored in the first electron collector 56. The electrons e stored in the first electron collector 56 flow into the primary winding 63 of the electricity extracting circuit 60 from the end 63a thereof, pass through the intermediate terminal 63c, and migrate to the electron supplier 20 (i.e. electron-circulation). At this time, a magnetic flux is generated in the secondary winding 64 of the transformer 62, whereby a voltage is generated. As a general rule, since the electrical load 65 is connected on the side of the secondary winding 64, the reverse electromotive force is generated by current flowing in the electrical load 65. By the reverse electromotive force, the amount of electrons migrating from the first electron collector 56 to the electron supplier 20 though the primary winding 63 is restricted. For this reason, it takes time for the electrons stored in the first electron collector 56 to be discharged sufficiently.

By transforming a voltage of the alternating current power supply 103 at the predetermined intervals, if a negative potential is applied to the left distribution electrode 101 of the electron distribution means 100, and a positive potential is applied to the right distribution electrode 102, the flying electrons e are received and stored in the second electron collector 57. The electrons stored in the second electron collector 57 flow into the primary winding 63 of the electricity extracting circuit 60 through the one end 63b thereof, pass through the intermediate terminal 63c, and migrate to the electron supplier 20 (i.e. electron-circulation). At this time, a magnetic flux reverse to the previous one is generated in the secondary winding 64 of the transformer 62, whereby a reverse voltage is generated. Namely, current flows in the electrical load 65 in the reverse direction. The reverse electromotive force is generated by current flowing in the electrical load 65 of the secondary winding 64. By the reverse electromotive force, the amount of electrons migrating from the second electron collector 57 to the electron supplier 20 though the primary winding 63 is limited. For this reason, it takes time for the electrons e stored in the second electron collector 57 to be discharged sufficiently.

On the other hand, no electrons e reach the first electron collector 56 during this period, so that almost all of the electrons stored in the first electron collector 56 return to the electron supplier 20 through the primary winding 63 of the transformer 62. Namely, almost all of the electrons stored in the first electron collector 56 are discharged during this period. Hence, in this period, the first electron collector 56 can prepare for the coming electrons in the next period.

In the same way as the first electron collector 56, the second electron collector 57 can prepare for the coming electrons in the next period.

In addition, an alternate voltage is generated on the side of the secondary winding 64 of the electricity extracting circuit 60.

As can be seen above, since the electron distribution means 100 alternately distributes the emitted electrons to the two electron collectors of the first electron collector 56 and the second electron collector 57, a large amount of electrons can be prevented from being stored in the electron collectors. Accordingly, an inconvenience such that further electrons e are rejected can be avoided, and the emitted electrons e can be efficiently received and return to the electron supplier 20.

Therefore, a reduction in electrical energy generation efficiency caused by the electrical charge storage phenomenon, the biggest problem with a linear acceleration electricity generating apparatus of the present invention, can be overcome, and whereby a highly efficient linear acceleration electricity generating apparatus can be achieved.

Returning to Fig. 1, an example of a linear acceleration electricity generating apparatus with a secondary emission preventing means 110 for preventing the electrons having reached the electron collector 50 from being emitted secondarily according to an embodiment of the present invention is described in greater details below.

In this example, an electrical conductor 110a is provided on the back of the electron collector 50 through the electrical insulation space F in such a manner that a positive voltage is applied to the electrical conductor 110a by a power supply 110b.

Due to positive charges stored in the electrical conductor 110a, negative charges are induced on the surface (on the back surface) of the electron collector 50 facing to the electrical conductor 110a, and positive charge are induced on the front surface (for receiving electrons e) of the electron collector 50.

Flying electrons e are attracted by the positive charges induced on the front surface of the electron collector 50, and surely reach the electron collector 50 surface. The electrons e collected by the electron collector 50 can be used as electrical energy through the electricity extracting circuit 60.

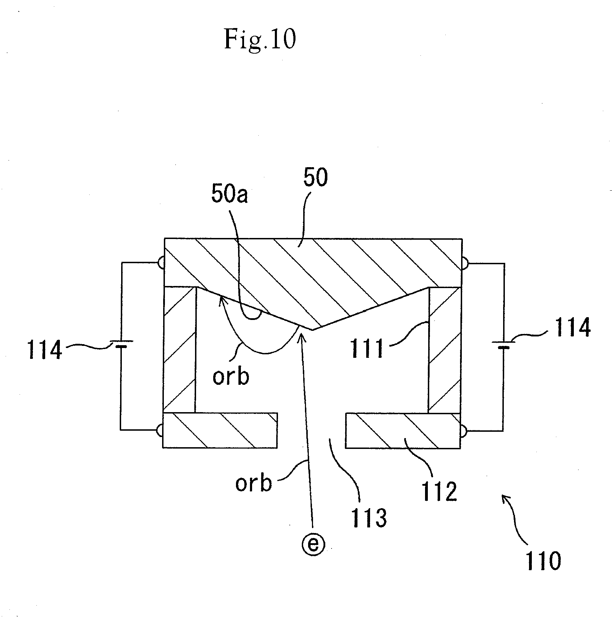

An example of a linear acceleration electricity generating apparatus having a secondary emission preventing means 110 for preventing the electrons having reached the electron collector 50 from being emitted secondarily according to an embodiment of the present invention is described in greater details below with reference to Fig.10.

In this example, an electrically insulating surrounding wall 111 made of an electrical insulating member is provided so as to surround the periphery of the front surface 50a of the electron collector 50, that is, the surface for receiving flying electrons e, a gate member 112 is provided on an opening of the electrically insulating surrounding wall 111, and an electron receiving mouth 113 is provided in vicinity of the center of the gate member 112. Further, the front surface 50a of the electron collector 50 is formed into an inclined surface which upwardly inclines toward the central part thereof from the periphery.

An electric power supply 114 is provided so as to apply a positive voltage to the electron collector 50 and a negative voltage to the gate member 112 which is electrically insulated by the electrically insulating surrounding wall 111.

Electrons e having passed through the electron receiving mouth 113 of the gate member 112 collide with the surface 50a of the electron collector 50. The electrons e having collided with or been emitted secondarily from the electron collector 50 move in the bent orbits, and eventually are absorbed into the electron collector 50. An electric field generated between the gate member 112 and the electron collector 50 functions as a power for causing the flying electrons e to approach the electron collector 50, so that all of the electrons having passed through the electron receiving mouth 113 of the gate member 112 are absorbed into the electron collector 50.

The electrons having absorbed into the electron collector 50 return to the electron supplier 20 through the electricity extracting circuit 60, while being utilized for electric power in the electrical load 61 provided in the middle of the electricity extracting circuit 60.

Additionally, when a positive voltage applied to the electron collector 50 is low or approximately zero, the efficiency in using the collected electrons can be enhanced.

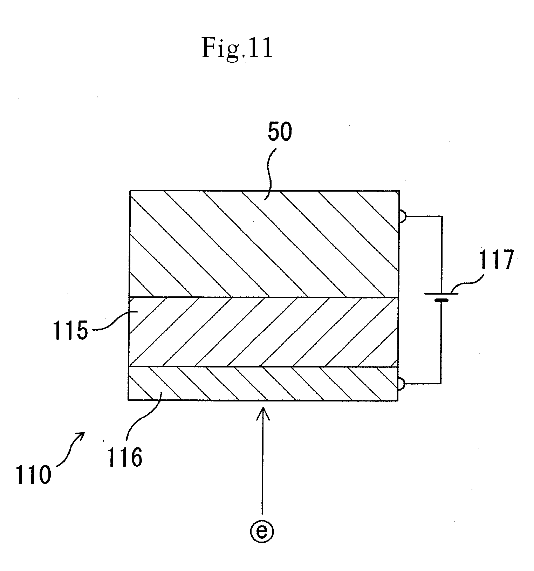

An example of a linear acceleration electricity generating apparatus with a secondary emission preventing means 110 for preventing the electrons having reached the electron collector 50 from being emitted secondarily according to an embodiment of the present invention is described in greater details below with reference to Fig. 11.

In this example, a quasi-two-dimensional electrical conductor 116 is layered on the front surface of the electron collector 50 through a quasi-two-dimensional insulator 115, and a power supply 117a is provided so as to apply a positive voltage to the electron collector 50 and a negative voltage to the quasi-two-dimensional electrical conductor 116 which is electrically insulated by the quasi-two-dimensional insulator 115.

If electrons flying toward the electron collector 50 collide with the quasi-two-dimensional electrical conductor 116, they pass through the quasi-two-dimensional electrical conductor 116 due to a tunnel phenomenon, further pass through the quasi-two-dimensional insulator 115 due to the same tunnel phenomenon, collide with the electron collector 50, and thereby being absorbed thereinto.

As for the electrons e having collided with the electron collector 50, the speed thereof is decreased, and further they are affected by Coulomb force of negative charges stored in the quasi-two-dimensional electrical conductor 116. Hence, the electrons e are prevented from flying out to the outside from the electron collector 50 through the quasi-two-dimensional insulator 115 and the quasi-two-dimensional electrical conductor 116. Namely, the secondary emission of the electrons e having reached the electron collector 50 can be prevented. Industrial Applicability

The linear acceleration electricity generation in accordance with the present invention, employing a method of linear acceleration electron emission, can replace conventional electricity generations such as thermal electricity generation, hydroelectricity generation, nuclear electricity generation and electricity generation using such natural energy as sunlight and the like, as an entirely new method of generating electricity. The linear acceleration electricity generating apparatus makes it possible to drastically reduce external energy input, pay due consideration to the environment, and supply stable electrical energy at low cost. Hence, the linear acceleration electricity generating apparatus of the present invention can be said to be of very high industrial applicability.

## Claims

1. A linear acceleration electricity generating apparatus comprising:

   an electron supplier made of a material possessing free electrons,
   an electron emitter provided on the electron supplier in an electrically conductive state,
   one or a plurality of electron accelerating electrodes for linearly accelerating electrons within the electron emitter in the direction of electron emission provided electrically insulated from the electron emitter, and
   an electron collector for collecting electrons emitted from the electron emitter provided opposite to the electron emitter through an electrical insulation space,

   wherein electrons within the electron emitter are linearly accelerated by applying a positive voltage to the electron accelerating electrode, emitted as ballistic electrons into the electrical insulation space from the electron emitter, and received and collected by the electron collector.

2. A linear acceleration electricity generating apparatus as recited in claim 1, wherein the electron emitter is formed by vertically planting one or a plurality of quasi-one-dimensional electrical conductors on the surface of the electron supplier.

3. A linear acceleration electricity generating apparatus as recited in claim 2, wherein the quasi-one dimensional electrical conductor is a carbon nanotube.

4. A linear acceleration electricity generating apparatus as recited in claim 2 or 3, wherein the electron accelerating electrode is made of a quasi-two-dimensional electrical conductor, and provided on the side periphery of the electron emitter, while being electrically insulated from the electron emitter formed by vertically planting quasi-one-dimensional electrical conductors.

5. A linear acceleration electricity generating apparatus as recited in claim 1, wherein an electron reaching position dispersion means is provided so as to prevent electrons flying toward the electron collector from concentratedly reaching one part of the electron collector by dispersing the orbits of the electrons.

6. A linear acceleration electricity generating apparatus as recited in claim 1, wherein a plurality of electron collectors are provided electrically insulated from each other, and an electron distribution means is provided so as to distribute electrons emitted from the electron emitter to the plurality of electron collectors.

7. A linear acceleration electricity generating apparatus as recited in claim 1, wherein a secondary emission preventing means is provided so as to prevent electrons having reached the electron collector from being emitted secondarily.

8. A linear acceleration electricity generating apparatus as recited in claim 1, wherein the electron collector is electrically connected to the electron supplier, and an electrical load is provided between the electron collector and the electron supplier.

Fig.1

Fig.2

Fig.3

Fig.4

Fig.5

Fig.6

$$w = \frac{1}{2} mv^2$$

50

−V volt

Fig.7

orb

50  94

90

92

92

93

e

94

91

Fig.8

Fig.9

Fig.10

Fig.11

## INTERNATIONAL SEARCH REPORT

| | International application No. |
|---|---|
| | PCT/JP2006/308277 |

A. CLASSIFICATION OF SUBJECT MATTER
***H02N11/00***(2006.01)

According to International Patent Classification (IPC) or to both national classification and IPC

B. FIELDS SEARCHED

Minimum documentation searched (classification system followed by classification symbols)
H02N11/00

Documentation searched other than minimum documentation to the extent that such documents are included in the fields searched
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 49-64794 A (Hitachi, Ltd.), 22 June, 1974 (22.06.74), (Family: none) | 1-8 |
| X | JP 2003-250285 A (Kabushiki Kaisha JGS), 05 September, 2003 (05.09.03), (Family: none) | 1-8 |

☐ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19 July, 2006 (19.07.06) | 25 July, 2006 (25.07.06) |

| Name and mailing address of the ISA/ Japanese Patent Office | Authorized officer |
|---|---|
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3449623 B
- JP 2003189646 A
- JP 2003250285 A
- JP 2004140288 A
- JP 2003258326 A
- JP 11510307 A